# EUROPÄISCHE PATENTANMELDUNG

(11) **EP 1 398 515 A2**
(43) Veröffentlichungstag der Anmeldung: **17.03.2004**
(21) Anmeldenummer: 03020968.8
(22) Anmeldetag: 16.09.2003
(51) Int. Cl.: F16B 7/18, A63B 9/00, E04B 1/28

(54) **Tragkonstruktion**

(30) Priorität: 16.09.2002 DE 20214307 U
(71) Anmelder: Schäfer, Hartmut, 50169 Kerpen (DE)
(72) Erfinder: Schäfer, Hartmut, 50169 Kerpen (DE)
(74) Vertreter: Grünecker, Kinkeldey, Stockmair & Schwanhäusser Anwaltssozietät

(57) **Zusammenfassung**

Es wird eine Tragkonstruktion unter Verwendung von Hohlprofilen, insbesondere von Rohren, geschaffen, die sich insbesondere für die Erstellung von Spiel- und Freizeitgeräten eignet. Die Tragkonstruktion sorgt für eine bessere Verbindung zwischen den Rohren und enthält zu diesem Zweck einen Verbindersatz (5), der wenigstens einen Verbinder (6, 18, 21, 25, 30, 35, 40) mit einer ersten Anlagefläche (7, 32, 37, 43) für ein erstes Rohr, einer zweiten Anlagefläche (11, 11 a, 11b, 22, 27, 34, 36b, 44) und Befestigungselemente (15) zum Befestigen des Verbinders am Rohr (2) umfasst.

## Beschreibung

Die Erfindung bezieht sich auf eine Tragkonstruktion, der im Oberbegriff von Anspruch 1 erläuterten Art.

Eine derartige Tragkonstruktion ist aus der DE 200 135 44 U bekannt. Die bekannte Tragkonstruktion ist aus Kunststoffrohren, insbesondere aus PE-HD, aufgebaut, die für die Herstellung von Rohrleitungen auf dem Markt waren, jedoch für Konstruktionszwecke eingesetzt wurden. Die Rohre mussten jedoch zum Aufbau des bekannten Traggerüstes aufwändig verschweißt werden. Zwar wurde auch eine Befestigung der Rohre durch herkömmliche Rohrschellen in Erwägung gezogen, diese hat sich jedoch nicht bewährt.

Der Erfindung liegt somit die Aufgabe zugrunde, eine Tragkonstruktion mit einer verbesserten Verbindung zwischen den Rohren zu schaffen.

Die Aufgabe wird durch die im Anspruch 1 angegebenen Merkmale gelöst.

Der erfindungsgemäße Verbindersatz enthält wenigsten eine erste Art eines Verbinders, der mit einer ersten Anlagefläche für ein erstes Rohr versehen ist, und der eine weitere Anlagefläche sowie Befestigungselemente umfasst, die den Verbinder direkt am Rohr befestigen. Dadurch ist eine sichere, haltbare Verbindung gewährleistet, die allen Sicherheitsvorschriften genügt, die insbesondere beim Einsatz für Spiel- oder Freizeitgeräte sehr streng sind.

Die zweite Anlagefläche kann entweder als weitere Anlagefläche für ein weiteres Rohr, zum Anlegen entweder an die Innenseite oder die Außenseite des Rohres , ausgebildet sein, oder sie kann als Klemmfläche zum Anlegen an ein Klemmstück ausgebildet sein, wobei mit dem Klemmstück Zubehör wie Netze oder Tücher oder Taue befestigt werden können, oder sie kann als Auflager ausgebildet sein, wobei der Verbinder dann als Bodenträger wirkt.

Weitere vorteilhafte Ausbildungen der Erfindung sind den weiteren Unteransprüchen zu entnehmen.

Ausführungsbeispiele der Erfindung werden nachfolgend anhand der Zeichnungen näher erläutert. Es zeigen:
- Fig. 1: eine schematische Darstellung eines beispielhaften, erfindungsgemäßen Tragegerüsts,
- Fig. 2: eine perspektivische, schematische Darstellung eines ersten Verbinders,
- Fig. 3: die Darstellung einer Verwendung des Verbinders nach Figur 2,
- Fig. 4: eine schematische, perspektivische Darstellung eines weiteren Verbinders,
- Fig. 5: die Darstellung einer Verwendung des Verbinders nach Figur 4 in Seitenansicht,
- Fig. 6: eine Draufsicht auf Figur 5,
- Fig. 7: eine schematische, perspektivische Darstellung eines weiteren Verbinders,
- Fig. 8: eine Darstellung einer Verwendung des Verbinders nach Figur 7,
- Fig. 9: eine Darstellung einer weiteren Verwendung des Verbinders nach Figur 7,
- Fig. 10: eine schematische, perspektivische Darstellung eines weiteren Verbinders,
- Fig. 11: eine Darstellung einer Verwendung des Verbinders nach Figur 10,
- Fig. 12: eine schematische, perspektivische Darstellung eines weiteren Verbinders,
- Fig. 13: eine Darstellung einer Verwendung des Verbinders nach Figur 12,
- Fig. 14: eine schematische, perspektivische Darstellung eines weiteren Verbinders,
- Fig. 15: eine Darstellung einer Verwendung des Verbinders nach Figur 14,
- Fig. 16: eine geschnittene Seitenansicht eines weiteren Verbinders, und
- Fig. 17: die Vorderansicht auf Fig. 16.

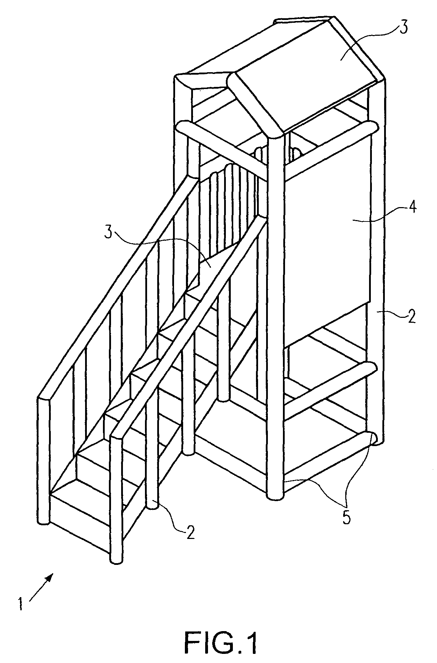

In Figur 1 ist ein bevorzugtes Ausführungsbeispiel einer erfindungsgemäßen Tragkonstruktion 1 ersichtlich, die hier als Spiel- und Freizeitgerät ausgebildet ist. Die Tragkonstruktion 1 bildet einen Aufgang für eine Rutsche oder dgl. für Kinderspielplätze, insbesondere im Freien. Das Traggerüst 1 wurde mit Rohren erstellt, wie sie zum Herstellen von Leitungsrohren im Handel sind. Besonders zweckmäßig sind Rohre aus Kunststoff, insbesondere PE-HD, die gemäß der Lehre des DE 200 135 44 U konstruktiv eingesetzt werden und sich für diese Zwecke als witterungsbeständig und unverwüstlich erwiesen haben. Das Traggerüst 1 kann jedoch vollständig oder teilweise auch aus Composite-Rohren erstellt werden, die aus einem Innenrohr und einem Außenrohr bestehen, deren Herstellung weiter unten näher erläutert wird.

Das Tragegerüst 1 wird aus einer Vielzahl von entsprechend zugeschnittenen Rohren 2 errichtet, wobei je nach Verwendungszweck Rohre mit unterschiedlichem Durchmesser und/oder unterschiedlichen Wandstärken eingesetzt werden können. Darüber hinaus werden mit den Rohren 2 Zubehörteile, wie beispielsweise eine Platte 3 für eine Trittfläche oder ein Dach oder eine Bespannung 4 in Form eines Tuchs oder eines Netzes kombiniert. Alle diese Teile werden durch einen Verbindersatz 5 mechanisch miteinander verbunden, dessen Bestandteile nachfolgend näher erläutert werden.

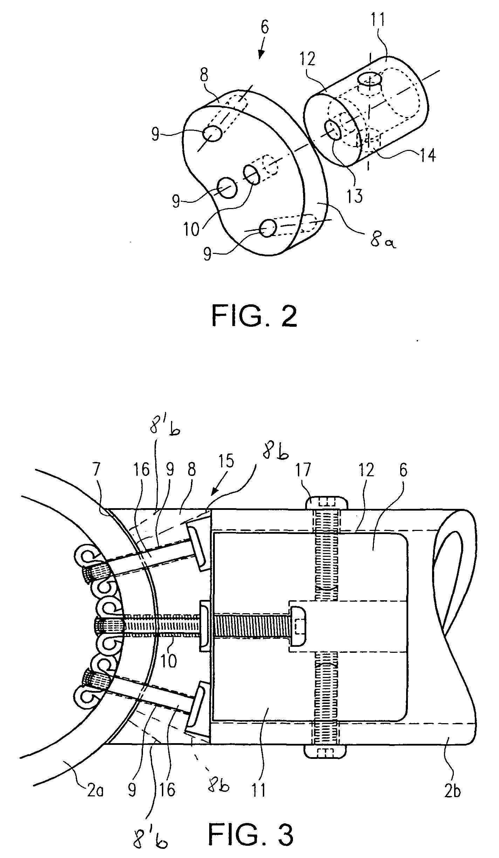

Der Verbindersatz 5 enthält einen ersten Verbinder 6 (Fig. 2 und 3), der zum Herstellen einer T-Verbindung zwischen zwei Rohren 2 ausgebildet ist. Der Verbinder 6 enthält zu diesem Zweck eine erste Anlagefläche 7 an einem bevorzugt scheiben- oder plattenförmigen Basisteil 8, wobei die Anlagefläche 7 als Teil einer Zylinderfläche mit dem Krümmungsradius der Außenseite eines Rohres 2 nach innen gewölbt ist, so dass die Anlagefläche 7 als Außenanlagefläche für eine vollflächige Anlage des Basisteiles 8 an der Außenseite eines Rohres 2 ausgebildet ist. In Umfangsrichtung des Rohres 2 erstreckt sich die Anlagefläche 7 über etwa einen Viertelkreis. Das Basisteil 8 wird von drei sich radial zur Krümmung der Anlagefläche 7 erstreckenden Nietenlöcher 9 und einem sich ebenfalls radial erstreckenden, bevorzugt mit Gewinde versehenen Mittelloch10 durchsetzt.

Das Basisteil 8 kann, wie in Fig. 2 gezeigt, mit zylindrisch verlaufenden Seitenflächen 8a oder, wie in Fig. 3 gestrichelt gezeigt, mit je nach Bedarf mehr oder weniger schräg verlaufenden Seitenflächen 8b oder 8'b versehen sein, so dass mehrere Basisteile 8 um den Umfang des Rohres 2a eng benachbart, aneinander anstoßend, befestigt werden können. Bevorzugt verlaufen die Seitenflächen 8b radial zum Krümmungsradius der Anlagefläche 7.

Der Verbinder 6 enthält ein weiterhin ein Halteteil 12 bevorzugt in Form eines Zylinders, der an seinem Außenumfang eine weitere nach außen gewölbte Anlagefläche 11 trägt, die ebenfalls als Zylinder- oder als Teilzylinderfläche ausgebildet ist, deren Durchmesser an die Innenweite der Rohre 2 angepasst ist, so dass die Anlagefläche 11 vollflächig an einer Innenseite eines Rohres anliegen kann. Das Halteteil 12 wird axial von einer Befestigungsbohrung 13 durchsetzt, die mit der Mittelbohrung 10 fluchtend ausrichtbar ist. Radial wird das Halteteil 12 von wenigstens einer Bohrung 14 durchsetzt, die der Befestigung des Rohres 2 dient.

Die Verwendung des Verbinders 6 ist in Figur 3 gezeigt. Der Verbinder 6 dient zur T-Verbindung zwischen einem ersten Rohr 2a mit einem zweitem Rohr 2b, das gegenüber dem ersten Rohr 2a eine etwas geringere, bevorzugt um ein Nennmaß geringere, Außen- und Innenweite aufweist. Der Verbinder 6 ist jedoch auch dann einsetzbar, wenn beide Rohre 2a, 2b gleich groß sind bzw. das Rohr 2b größer als das Rohr 2a ist. Zum Herstellen der Verbindung wird zunächst das Basisteil 8 mit Hilfe von insgesamt mit 15 bezeichneten Befestigungselementen an der Außenseite des Rohres 2a befestigt. Die Befestigungselemente enthalten bevorzugt Blindnieten 16, insbesondere die speziell dargestellten, handelsüblichen Schälnieten bzw. Spreizblindnieten. Die Blindnieten 16 werden in die Nietenlöcher 9 eingesetzt und durch die Wandung des Rohres 2a getrieben. Beim Setzen der Niete spreizen sich die freien Enden im Inneren des Rohres 2a auf und verankern das Basisteil 8 unverlierbar und unverrückbar an der Wandung des Rohres 2a.

Durch die Mittelbohrung 10 wird entweder ein abgewandelter Blindniet mit Innengewinde gesetzt oder die Öffnung 10 ist selbst mit Gewinde versehen. In dieser Öffnung 10 wird anschließend das Halteteil 12 über die axiale Mittelbohrung 13 so befestigt, dass sich die Innen-Anlagefläche 11 zum Herstellen einer 90°-T-Verbindung senkrecht zur Anlagefläche 7 erstreckt. Bei Verwendung von Halteteilen 12 mit abgeschrägter Stirnfläche können auch andere Winkelverbindungen realisiert werden.

Anschließend wird das zweite Rohr 2b auf die Anlagefläche 11 geschoben, bis es an einer radialen Anlagefläche am Basisteil 8 anliegt, und mit weiteren Befestigungselementen 15, hier sind Schrauben 17 dargestellt, die sich ebenfalls durch die Wandung des Rohres 2b erstrecken und in die mit Gewinde ausgestatteten Bohrungen 14 eingreifen, befestigt.

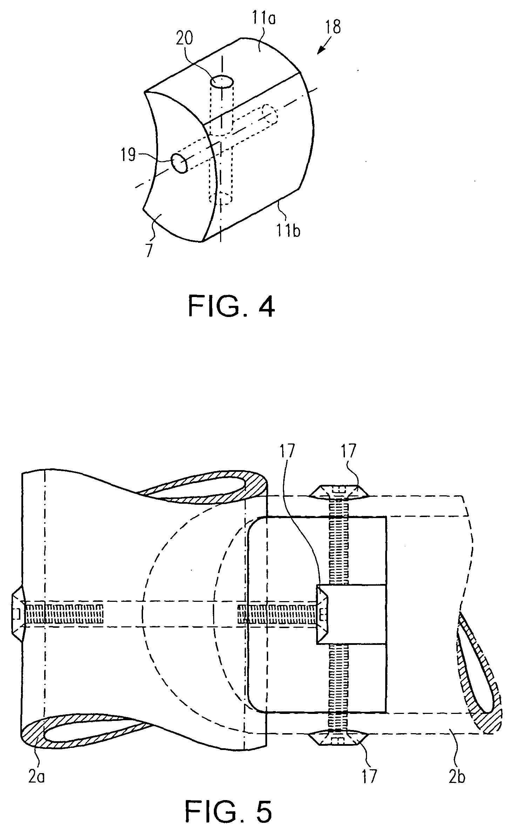

Figur 4 zeigt einen weiteren Verbinder 18, der sowohl den Verbinder 6 innerhalb des Verbindersatzes 5 ersetzen kann, jedoch auch zusätzlich zum Verbinder 6 vorgesehen werden kann. Der Verbinder 18 ist einstückig und blockförmig ausgebildet und enthält wiederum die als Teil eines Zylinders ausgebildete Anlagefläche 7 zum Anlegen an die Außenseite des Rohres 2, die analog der Anlagefläche 7 des Verbinders 6 ausgebildet ist. Der Verbinder 18 enthält weiterhin zwei teilzylindrische Anlageflächen 11a und 11b, die zur Anlage an die Innenseite eines Rohres 2, analog der kreiszylindrischen Innen-Anlagefläche des Verbinders 6, ausgebildet sind. Der blockförmige Verbinder 18 wird von einer ersten Bohrung 19, die in der Außen-Anlagefläche 7 mündet, und einer zweiten Bohrung 20, die in den Innen-Anlageflächen 11a, 11b mündet durchsetzt.

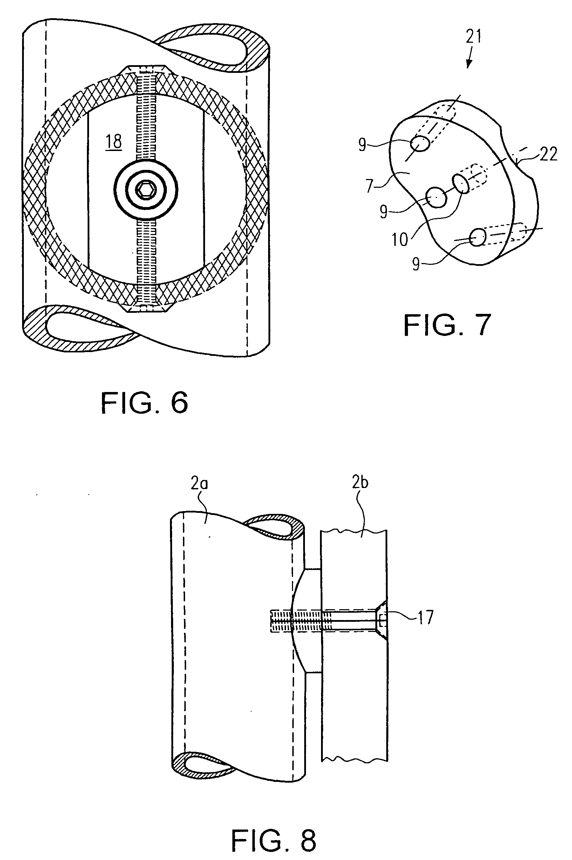

Wie die Figuren 5 und 6 zeigen, wird zunächst der Verbinder 18 mit seiner Außen-Anlagefläche 7 an der Außenseite eines ersten Rohres 2a befestigt. Die Befestigung kann, wie im ersten Ausführungsbeispiel, durch Befestigungselemente 15 in Form der sich durch die Rohwandung erstreckenden Blindniete 16 erfolgen. Die Befestigung kann jedoch auch, wie Figur 5 zeigt, durch eine sich durch das Rohr 2a diametral erstreckende und auf der dem Verbinder 18 gegenüberliegenden Seite durch eine Mutter gesicherte Schraube erfolgen. Die Befestigung des zweiten Rohres 2b erfolgt wiederum durch zwei Schrauben 17, die sich durch die Wandung des Rohres 2b erstrecken und in den mit Gewinde versehenen Bohrungen 20 des Verbinders 18 aufgenommen sind.

Figur 7 zeigt einen weiteren Verbinder 21 des Verbindersatzes 5, der im Wesentlichen ähnlich des Basisteiles 8 des ersten Verbinders 6 ausgebildet ist. Tatsächlich kann der Verbinder 21 an Stelle des Basisteiles 8 des Verbinders 6 eingesetzt werden, was die Anzahl der auf Vorrat gehaltenen Teile des Verbindersatzes reduzieren hilft. Der Verbinder 21 ist ebenfalls platten - bzw. scheibenförmig ausgebildet und enthält an einer Seite die bereits beschriebene Außen-Anlagefläche 7, die von den Nietenlöchem 9 und der Mittelbohrung 10 durchsetzt ist . An der der gekrümmten Außen-Anlagefläche 7 gegenüberliegenden Seite ist der platten - bzw. scheibenförmige Verbinder 21 mit einer weiteren nach innen gekrümmten Anlagefläche 22 für die Außenseite eines Rohres versehen. Die Außen-Anlagefläche 22 erstreckt sich parallel zur Außen-Anlagefläche 7 an der anderen Seite des Verbinders 21, so dass, wie Figur 8 zeigt, zwei Rohre 2a, 2b parallel verbunden werden können. Im dargestellten Ausführungsbeispiel ist die Anlagefläche 22 mit einem kleineren Krümmungsradius zur Aufnahme eines Rohres 2b mit einem kleineren Außendurchmesser als das Rohr 2a ausgebildet, das an der Außen-Anlagefläche 7 anliegt. Die Anlageflächen 7, 22 können jedoch auch unter einem Winkel von 90° zueinander versetzt sein, um eine 90°-Kreuzverbindung zweier Rohre zu gestatten. Andere Kreuzungswinkel sind möglich.

Je nach der erforderlichen Haltbarkeit der Verbindung kann der Verbinder 21 mit beiden Rohren durch eine einzige, sich durch die Wandung beider Rohre und durch die Mittelbohrung 10 erstreckende Schraube 17 verbunden werden. Es ist jedoch bevorzugt, dass zunächst der Verbinder 21 am ersten Rohr 2a über Befestigungselemente 15 in Form von Blindnieten angebracht und erst dann das zweite Rohr 2b über die mit Gewinde versehene Mittelbohrung 10 angeschraubt wird.

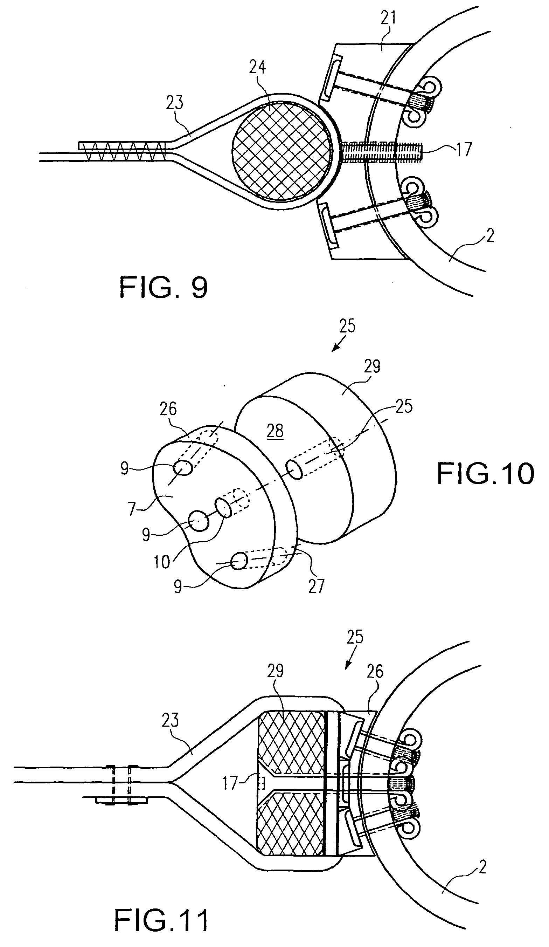

Einen weitem Verwendungszweck des Verbinders 21 zeigt Figur 9. Bei diesem Ausführungsbeispiel dient die Außen-Anlagefläche 22 als Klemmfläche zum Festklemmen einer Befestigungsschlaufe 23 eines Tuches oder eines Netzes oder dergleichen über eine Stange 24, die in die Befestigungsschlaufe 23 geschoben und mit Hilfe von Befestigungselementen, dargestellt ist, eine Schraube 17, am Verbinder 21 befestigt ist.

Figur 10 zeigt einen weiteren Verbinder 25, der ein erstes Basisteil 26 aufweist, das mit der Außen-Anlagefläche 7, den Nietenlöchern 9 und der mittleren Bohrung 10 analog dem Basisteil 8 des Verbinders 6 ausgebildet ist. Die der Außen-Anlagefläche 7 gegenüberliegende Seite des platten - oder scheibenförmige Teils 26 ist als Klemmfläche 27 ausgebildet, die mit einer Stirnfläche 28 eines Klemmstückes 29 zusammenwirkt, das mit einer mittleren Bohrung 29 versehen ist, die mit der mittleren Bohrung 10 am Basisteil 26 fluchtend ausgerichtet werden kann. Die einander zugewandten Klemmflächen 27, 28 können mit entsprechenden Aufnahmenuten versehen sein, wie dies in Figur 11 dargestellt ist. Das Klemmstück 29 kann auch als Leiste ausgebildet sein, die mit mehreren Teilen 26 zusammenwirkt.

Gemäß Figur 11 wird der Verbinder 25 ebenfalls zum Festklemmen von Befestigungsschlaufen 23 verwendet, die um das Klemmstück 29 geschlungen werden, das zu diesem Zweck abgerundete Kanten aufweist. Durch Anziehen einer Schraube 17 durch das Klemmstück 29, das Basisteil 26 und die Wandung des Rohres 2 wird die Schlaufe 23 festgeklemmt.

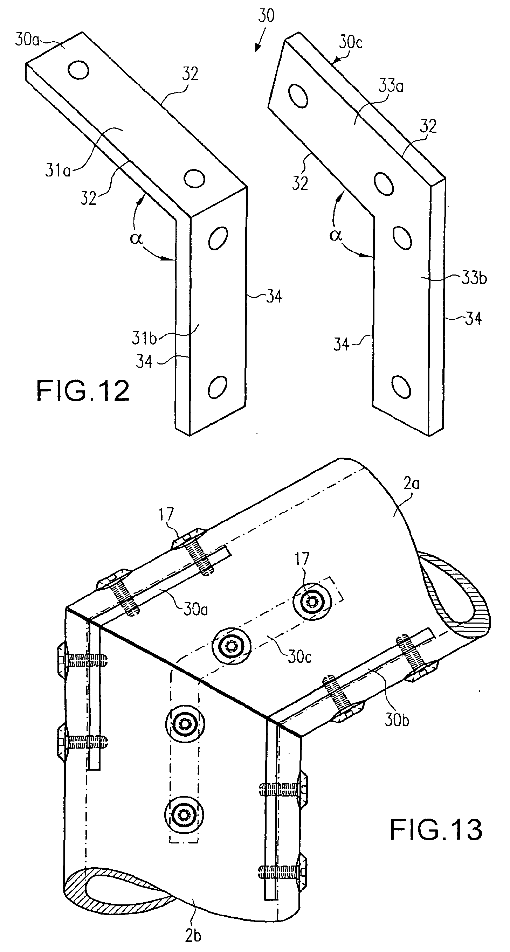

Figur 12 zeigt einen weiteren Verbinder 30, der zum Herstellen von Gehrungsverbindungen, d. h. stumpfen Verbindungen zweier Rohre 2a, 2b unter einem vorbestimmten Gehrungswinkel α, beispielsweise 45° oder 60°, verwendet wird. Der Gehrungsverbinder 30 enthält zwei Teile 30a, 30b, die streifenförmig ausgebildet sind und jeweils zwei unter dem Gehrungswinkel α aufeinander stoßende, mit Nieten- oder Schraublöchem versehene Schenkel 31a, 31b,33a, 33b, aufweisen. Die Schenkel jedes Teils 30a, 30b, sind aus Flachmaterial gebogen oder weisen eine entsprechend dem Krümmungswinkel der Innenseite der zu verbindenden Rohre 2a, 2b gekrümmte Innen-Anlagefläche auf. Beim Teil 30a sind die Schenkel 31a, 31b so zusammengesetzt, dass der Gehrungswinkel α zwischen ihren breiten Seiten auftritt, so dass das Teil 30 a in den äußeren und/oder inneren Scheitelpunkt der Gehrung passt (siehe Figur 13). Beim Teil 30c sind die Schenkel 33a, 33b, so zusammengesetzt, dass der Gehrungswinkel α zwischen den Schmalseiten auftritt, so dass das Teil 30c, wie Figur 13 zeigt zum Verbinden der Rohre 2a, 2b zwischen den beiden Scheitelpunkten der Gehrung eingesetzt werden kann. Zweckmäßigerweise sind jeweils zwei der Teile 30a, 30b vorgesehen. Beim Einbau der flachen, streifenförmigen Teile 30a, 30b liegen diese jeweils mit zwei Anlageflächen bzw. -kanten 32, 34 an der Innenseite der Rohre 2 an.

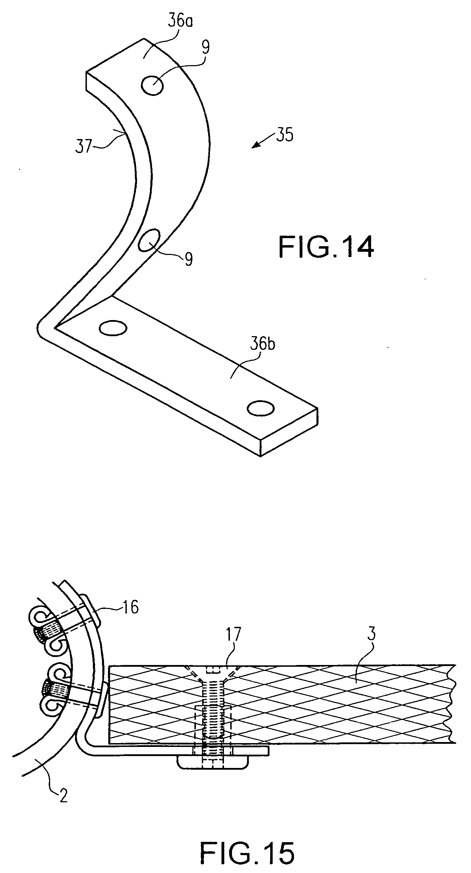

Figur 14 zeigt einen weiteren Verbinder 35, der im dargestellten Ausführungsbeispiel als Bodenträger ausgebildet ist. Der Verbinder 35 ist ebenfalls streifenförmig ausgebildet und enthält einen ersten Schenkel 36a und einen zweiten Schenkel 36b. Der erste Schenkel 36a ist mit einer Außen-Anlagefläche 37 versehen, die durch Biegen des ersten Schenkels 36a mit dem Krümmungsradius des Außendurchmessers des Rohres 2 derart erfolgt, das sich der Schenkel 36a in Umfangsrichtung an das Rohr 2 legen kann. Im Schenkel 36a sind bevorzugt Nietenlöcher 9 zum Befestigen des Verbinders 35 mit Hilfe der bereits beschriebenen Blindnieten 16 am Rohr 2 vorgesehen. Der zweite Schenkel 36b des Verbinders 35 bildet ein Auflager für eine Platte 3, die bevorzugt durch eine Schraubenverbindung 17 befestigt wird.

Die Verbinder bestehen bevorzugt aus Metall, insbesondere aus Aluminium; können jedoch auch aus einem Kunststoff gefertigt werden.

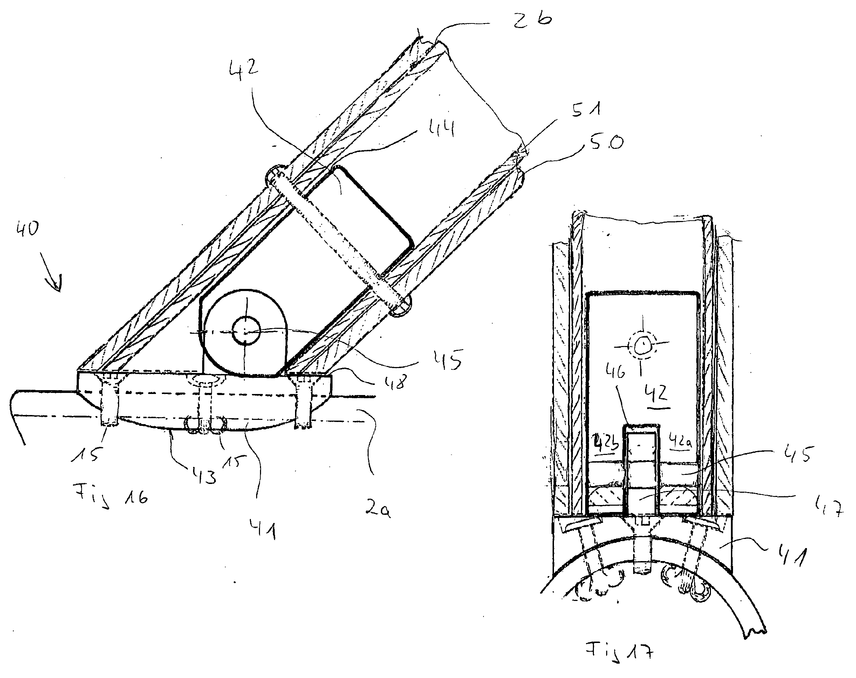

Die Fig. 16 und 17 zeigen einen weiteren Verbinder 40, der ähnlich wie der Verbinder 6 ausgebildet ist, d.h. ein Basisteil 41 und ein am Basisteil 41 befestigtes Halteteil 42 aufweist. Das Basisteil 41 ist bevorzugt scheiben- bzw. plattenförmig ausgebildet und mit einer Außenanlagefläche 43 versehen, mit der das Basisteil 41 am Außenumfang eines ersten Rohres 2a anliegt und dort mit Hilfe der bereits beschriebenen Schrauben bzw. Nieten befestigt ist. Das Halteteil 42 ist ebenfalls mit der zylindrischen oder teilzylindrischen, bzw. anderweitig an den Innenumfang des zweiten Rohres 2b angepassten Innenanlagefläche 44 versehen, und über eine Schwenkachse 45 mit dem Basisteil 41 verbunden. Die Schwenkachse 45 ist bevorzugt ein Stift, der das Halteteil 42 und das Basisteil 41 schwenkbar miteinander verbindet. Zu diesem Zweck ist das Halteteil 42 an seinem dem Basisteil 41 zugewandten Ende mit einem Schlitz 46 versehen, in den eine vom Basisteil 41 vorstehende Lasche 47 derart aufgenommen ist, dass sich der Schwenkstift 45 durch beide Teile erstrecken kann. Das dem Basisteil 41 zugewandte Ende des Halteteils 42 ist mit dem Schwenkradius gerundet, so dass das Halteteil 42 sich im Wesentlichen über einen Schwenkwinkel von etwa 180° bezüglich des Basisteils 41 frei verschwenken kann.

Im dargestellten Ausführungsbeispiel erstreckt sich der Schwenkstift 45 parallel zu einer Tangente am ersten Rohr 2a, so dass die beiden Rohre 2a, 2b in einer gemeinsamen Ebene liegend miteinander verbunden werden können. Erstreckt sich der Schwenkstift 45 parallel zur Achse des ersten Rohres 2a, so sind winklige Kreuzverbindungen möglich.

Der Verbinder 40 hat den Vorteil, dass hier der Kreuzungswinkel zwischen den beiden Rohren 2a und 2b nicht festgelegt wird. Das anzuschließende Rohr, in diesem Fall das zweite Rohr 2b, muss lediglich im gewünschten Winkel abgeschnitten werden und muss mit der üblichen Schraube oder mit anderen Befestigungsmitteln am Halteteil 42 befestigt werden, wodurch sich der Verbinder 40 an exakt diesen Winkel anpasst. Um auch hier einen glatten Anschluss des Rohres 2b an den Verbinder 40 zu erhalten, ist auch das Basisteil 41 mit einer Auflagefläche 48 versehen, die so groß ist, dass die geschnittene Stirnseite des zweiten Rohres 2b glatt und fluchtend aufliegt.

Mit ein- und derselben Art eines Verbinders 40 können somit die unterschiedlichsten Winkelverbindungen, beispielsweise zum Fünfeck, zum Sechseck oder dgl., jedoch auch völlig regellose Winkelverbindungen realisiert werden, ohne dass für jeden Winkel jeweils ein Verbinder auf Vorrat gehalten werden muss. Auch unvermeidliche Fertigungstoleranzen können so problemlos ausgeglichen werden.

In den Fig. 16 und 17 ist weiterhin ein Composite-Rohr als zweites Rohr 2b eingesetzt. Das Composite-Rohr besteht aus einem Außenrohr 50 und wenigstens einem Innenrohr 51. Das Außenrohr 50 wurde im Hinblick auf die Belastungen am Einsatzort, also beispielsweise im Hinblick auf UV-Beständigkeit, auf Witterungsbeständigkeit, auf Korrosionsbeständigkeit und auf ein geringes Verfetzungsrisiko hin ausgewählt, wobei das Außenrohr 50 bevorzugt ein PE-HD-Rohr ist, wie dies auch in den anderen Ausführungsbeispielen bevorzugt ist. Das Innenrohr 51 wurde insbesondere im Hinblick auf eine erhöhte Festigkeit ausgewählt und besteht bevorzugt aus Metall, z.B. feuerverzinkter Stahl oder einer Aluminiumlegierung, wie beispielsweise Duralumin. Da handelsübliche Rohre nur im Hinblick auf ihren Außendurchmesser maßhaltig sind, wurde ein neues Verfahren zum Herstellen der Composite-Rohre entwickelt. Dabei wird zunächst der Innendurchmesser des Außenrohres 50 auf den Außendurchmesser des Innenrohres 51 aufgeweitet, wobei dies bevorzugt durch mechanischen, schneidenden oder schabenden Abrieb geschieht. Zu diesem Zweck wird ein entsprechend angepasstes Schneidwerkzeug durch das Außenrohr 50 gezogen. Danach wird das Innenrohr eingezogen, wobei dies mit den einfachsten Mitteln, beispielsweise mit einem Stahlseil und einer Schwerlastwinde durchgeführt werden kann. Die beiden Rohre werden höhengleich und hintereinanderliegend angeordnet, das Stahlseil wird durch beide Rohre gezogen und am Ende des Innenrohres verankert, wobei dies beispielsweise durch einen Stufenzylinder geschehen kann, der verschiedene in jeweils verschiedene Innendurchmesser des Innenrohrs passende Stufen und eine sich an die Wandstärke des Innenrohres am freien Ende anliegende Zugfläche enthält. Dann wird vom vorderen Ende des Außenrohres her das Innenrohr in das Außenrohr eingezogen, wobei der Schneidsatz mit dem Innenrohr gekoppelt werden kann. Bei ausreichender Unterstützung der Rohre können damit Rohrlängen von Composite-Rohren von teilweise bis zu 1200 cm hergestellt werden. Der Innendurchmesser des Außenrohres 50 wird bevorzugt nur so weit aufgeweitet, dass das Innenrohr formschlüssig, d.h. durch Press- oder Reibsitz, im Außenrohr 50 hält, so dass weitere Befestigungsmittel überflüssig sind. Gegebenenfalls kann die Verbindung der beiden Rohre noch durch Verbindungsstücke, Schrauben oder Nieten, Klebstoffe oder dgl. Verbessert werden.

In Abwandlung der beschriebenen und gezeichneten Ausführungsbeispiele können die Verbinder an die äußeren Gegebenheiten, insbesondere an die Abmessungen und die Querschnittsformen der Rohre bzw. Rohrprofile und die Winkel der gewünschten Verbindungen angepasst werden. Der Verbindersatz kann weniger als die angegebene Vielfalt der Verbinder aufweisen, wenn bestimmte Verbinder nicht benötigt werden. Statt für Spiel -und Freizeitgeräte kann die erfindungsgemäße Tragkonstruktion auch für andere Zwecke, beispielsweise zum Aufbau von Messeständen oder dgl. eingesetzt werden. Als Gehrungsverbinder kann ebenfalls eine kombinierte Innen - und Außenhülse mit einer Innen-Außen-Anlagefläche oder eine reine Außenhülse bzw. eine reine Innenhülse verwendet werden.

## Patentansprüche

1. Tragkonstruktion (1 ) mit einer Mehrzahl von als Hohlprofilen, insbesondere als Rohre (2) ausgebildeten Trägern, insbesondere aus Kunststoff, sowie einem Verbindersatz (5), der wenigstens einen Verbinder (6, 18, 21, 25, 30, 35, 40) mit einer ersten Anlagefläche (7, 32, 37, 42) für ein erstes Rohr (2), einer zweiten Anlagefläche (11, 11a, 11b, 22, 27, 34, 36b, 44) und Befestigungselementen (15) zum Befestigen des Verbinders am Rohr (2) umfasst.

2. Tragkonstruktion nach Anspruch 1, **dadurch gekennzeichnet, dass** die erste Anlagefläche eine Außenanlagefläche (7, 37, 43) zur Anlage an die Außenseite des Rohres ist.

3. Tragkonstruktion nach Anspruch 1 oder 2, **dadurch gekennzeichnet, dass** sich die erste und die zweite Anlagefläche im Winkel zueinander erstrecken.

4. Tragkonstruktion nach einem der Ansprüche 1 bis 3, **dadurch gekennzeichnet, dass** die erste Anlagefläche (7, 34, 37, 43) eine Zylinderfläche mit einem für eine flächige Anlage an die Krümmung des Rohres (2) angepassten Krümmungsradius ist.

5. Tragkonstruktion nach einem der Ansprüche 1 bis 4, **dadurch gekennzeichnet, dass** die zweite Anlagefläche (11, 11a, 11b, 22, 34, 44) zur Anlage an einem zweiten Rohr (2) ausgebildet ist.

6. Tragkonstruktion nach Anspruch 5, **dadurch gekennzeichnet, dass** die zweite Anlagefläche (11, 11a, 11b, 22, 34, 44) eine Zylinderfläche mit einem für eine flächige Anlage an die Krümmung des Rohres (2) angepassten Krümmungsradius ist.

7. Tragkonstruktion nach einem der Ansprüche 1 bis 6, **dadurch gekennzeichnet, dass** die erste Anlagefläche (7, 43) eine Außen-Anlagefläche für eine Außenseite des Rohres (2) und die zweite Anlagefläche (11, 11a, 11b, 44) eine Innen-Anlagefläche für eine Innenseite des zweiten Rohres (2) ist.

8. Tragkonstruktion nach einem der Ansprüche 1 bis 7, **dadurch gekennzeichnet, dass** der Verbinder (6, 21, 25, 40) ein scheiben - oder plattenförmiges Basisteil (8, 21, 26, 41) umfasst, wobei die erste, als Außen-Anlagefläche ausgebildete Anlagefläche (7, 43) an einer Seite vorgesehen ist.

9. Tragkonstruktion nach Anspruch 8, **dadurch gekennzeichnet, dass** der Verbinder (6) ein Halteteil (12) umfasst, das mit der zweiten, als Innen-Anlagefläche ausgebildeten Anlagefläche (11) versehen ist und lösbar an der anderen Seite des Basisteils (8) befestigt ist.

10. Tragkonstruktion nach Anspruch 8, **dadurch gekennzeichnet, dass** der Verbinder ein Halteteil (42) umfasst, das mit der zweiten, als Innenanlagefläche ausgebildeten Anlagefläche (44) versehen ist und schwenkbar an der anderen Seite des Basisteils (48) befestigt ist.

11. Tragkonstruktion nach Anspruch 8, **dadurch gekennzeichnet, dass** die andere Seite des scheiben- oder plattenförmigen Basisteils (21) mit einer Außen-Anlagefläche (22) für ein weiteres Rohr (2) versehen ist.

12. Tagkonstruktion nach Anspruch 8, **dadurch gekennzeichnet, dass** die andere Seite des scheiben- oder plattenförmigen Basisteils (21, 26) mit einer als Klemmfläche (22, 27) ausgebildeten Anlagefläche versehen ist, an der ein Klemmstück (24, 29) lösbar zu befestigen ist.

13. Tragkonstruktion nach einem der Ansprüche 1 bis 7; **dadurch gekennzeichnet, dass** der Verbinder (18) blockförmig ausgebildet ist und jeweils eine Außen- und eine Innen- Anlagefläche (7, 11a, 11b) für jeweils ein Rohr (2) aufweist.

14. Tragkonstruktion nach einem der Ansprüche 1 bis 13, **gekennzeichnet durch** einen weiteren Verbinder (30) zum Verbinden zweier Rohre (2) auf Gehrung, der zwei Innen-Anlageflächen (34) für Rohre (2) aufweist.

15. Tragkonstruktion nach einem der Ansprüche 1 bis 14., **gekennzeichnet durch** weitere Zubehör-Verbinder (35).

16. Tragkonstruktion nach Anspruch 15, **gekennzeichnet durch** einen als Bodenträger ausgebildeten Zubehör-Verbinder (35), der eine Außen-Anlagefläche (37) für ein Rohr (2) und ein Auflager (36b) umfasst.

17. Tragkonstruktion nach einem der Ansprüche 1 bis 16, **gekennzeichnet durch** die Rohrwand durchdringende Befestigungselemente in Form von Nieten (16), insbesondere von Blind- bzw. Schälnieten, und /oder Befestigungselemente (15) in Form von Schrauben (17) vorgesehen sind.

18. Tragkonstruktion nach einem der Ansprüche 1 bis 17, **gekennzeichnet durch** die Verwendung von PE-HD-Rohren (2).

19. Tragkonstruktion nach einem der Ansprüche 1 bis 17, **gekennzeichnet durch** die Verwendung von Composite-Rohren (2), insbesondere mit einem Außenrohr (50) aus PE-HD- und einem Innenrohr (51) aus Metall, insbesondere Duralumin.

20. Tragkonstruktion nach einem der Ansprüche 1 bis 19, **gekennzeichnet durch** seine Verwendung zum Aufbau eines Spiel- oder Freizeitgerätes.

21. Verbinder (6, 18) für eine Tragkonstruktion aus einer Mehrzahl von Rohren, nach einem der Ansprüche 1 bis 20, **gekennzeichnet durch** eine Außen-Anlagefläche (7) für ein Rohr (2), eine Innen-Anlagefläche (11a, 11b) für ein Rohr (2) und Befestigungselemente (15) zum Befestigen der Rohre (2) an den Anlageflächen (7, 11, 11a, 11b) **durch** die Rohrwand hindurch.

22. Verbinder (21) für eine Tragkonstruktion aus einer Mehrzahl von Rohren nach einem der Ansprüche 1 bis 20, **gekennzeichnet durch** zwei Außen-Anlageflächen (7, 22) für Rohre (2) und Befestigungselemente (15) zum Befestigen der Rohre (2) **durch** die Rohrwandung hindurch.

23. Verbinder (21, 25) für eine Tragkonstruktion aus einer Mehrzahl von Rohren nach einem der Ansprüche 1 bis 20, **gekennzeichnet durch** eine Außen-Anlagefläche (7) und eine Klemmfläche (22, 27) für ein Klemmstück (24, 29) sowie mit Befestigungselementen (15) zum Befestigen des Verbinders am Rohr **durch** die Rohrwandung hindurch und zum Befestigen des Klemmstücks (24, 29) an der Klemmfläche.

24. Verbinder (30) für eine Tragkonstruktion aus einer Mehrzahl von Rohren nach einem der Ansprüche 1 bis 20, **gekennzeichnet durch** zwei in einem Gehrungswinkel (α) zueinander verlaufenden Innen-Anlageflächen (34) sowie mit Befestigungselementen (15) zum Befestigen des Verbinders (30) an zwei Rohren (2).

25. Verbinder (35) für eine Tragkonstruktion aus einer Mehrzahl von Rohren nach einem der Ansprüche 1 bis 20, **gekennzeichnet durch** eine Außen-Anlagefläche (37) für ein Rohr (2) und ein Auflager (36b) sowie mit Befestigungselementen (15) zum Befestigen des Verbinders (35) am Rohr (2) **durch** die Wandung des Rohres hindurch.

26. Verfahren zum Herstellen von Composite-Rohren (2) gemäß Anspruch 19, wobei der Innendurchmesser des Außenrohres (50) mechanisch, insbesondere spanabhebend, auf den Außendurchmesser des Innenrohres (51) aufgeweitet und Innenrohr (51) und Außenrohr (50) übereinandergezogen werden.
